# EUROPÄISCHE PATENTSCHRIFT

(11) **EP 0 798 188 B1**
(45) Veröffentlichungstag und Bekanntmachung des Hinweises auf die Patenterteilung: **04.08.1999**
(21) Anmeldenummer: 96890184.3
(22) Anmeldetag: 05.12.1996
(51) Int. Cl.: B61B 9/00, B61B 12/10, B61B 13/12

(54) **Anlage zum Transport von Personen und bzw. oder von Gütern**
Installation for transporting persons and/or goods
Installation pour transporter des personnes et/ou des marchandises

(30) Priorität: 26.03.1996 AT 55296
(43) Veröffentlichungstag der Anmeldung: 01.10.1997
(73) Patentinhaber: KONRAD DOPPELMAYR & SOHN MASCHINENFABRIK GESELLSCHAFT M.B.H. & CO. KG., 6961 Wolfurt (AT)
(72) Erfinder: Meindl, Bernd, 6971 Hard (AT)
(74) Vertreter: Atzwanger, Richard, Dipl.-Ing. Patentanwalt

(56) Entgegenhaltungen:
- EP-A- 0 465 411
- EP-A- 0 673 818
- CH-A- 390 979
- FR-A- 2 591 549

## Beschreibung

Die gegenständliche Patentanmeldung betrifft eine Anlage zum Transport von Personen und bzw. oder von Gütern mit einer Mehrzahl von mit Laufrädern ausgebildeten Fahrzeugen, welche an ein sich ständig bewegendes Förderseil ankuppelbar sind, wodurch sie längs einer Fahrbahn, insbesondere längs Schienen, verfahrbar sind, wobei in Bereichen von Einstiegs- bzw. Ausstiegsstellen, in welchen die Fahrzeuge vom Förderseil abkuppelbar sind, Verzögerungs- bzw. Beschleunigungsräder vorgesehen sind, welche an die Fahrzeuge zur Anlage bringbar sind, wodurch deren Fahrgeschwindigkeit verkleinert oder vergrößert wird und wobei die Fahrzeuge an ihrer Unterseite mit mindestens einer Kontaktfläche ausgebildet sind, mit welcher die Verzögerungs- bzw. die Beschleunigungsräder, welche im Bereich der Fahrbahn um zumindest angenähert horizontale Achsen gelagert sind, zusammenwirken.

Eine derartige Anlage ist aus der EP-A1 673 817 bekannt. Bei dieser bekannten Anlage sind die Fahrzeuge mit Luftreifen ausgebildet, mittels welcher sie längs der Fahrbahn verfahrbar sind. Aufgrund der Luftreifen können die Fahrzeuge in Abhängigkeit von der Anzahl der Passagiere, welche sich in diesen befinden, unterschiedliche Höhenlagen einnehmen. Zur Erzielung der erforderlichen Verzögerung der Fahrzeuge nach deren Abkupplung vom Förderseil bzw. der erforderlichen Beschleunigung der Fahrzeuge vor deren Ankupplung an das Förderseil muß gewährleistet sein, daß die Verzögerungsräder bzw. die Beschleunigungsräder an die an der Unterseite der Fahrzeuge befindlichen Kontaktflächon dicht anliegen. Infolge der unterschiedlichen Höhenlagen der Fahrzeuge liegen jedoch bei einer geringen Anzahl von Fahrgästen und einer hierdurch bedingten Hochlage der Fahrzeuge die Verzögerungsräder bzw. die Beschleunigungsräder an die Kontaktflächen nicht dicht an. Soferne demgegenüber die Verzögerungsräder bzw. die Beschleunigungsräder so angeordnet werden, daß sie bei Hochlagen der Fahrzeuge an die Kontaktflächen dicht anliegen, so bedingt dies bei einer großen Anzahl von Passagieren und einer dadurch bewirkten Tieflage der Fahrzeuge einen zwischen den Rädern und der Kontaktfläche auftretenden starken Druck, durch welchen die Lagerung der Verzögerungsräder bzw. der Beschleunigungsräder und die Oberflächen dieser Räder, welche aus einem elastischen Material, z.B. Gummi gefertigt sind, einem so starken Verschleiß unterliegen, daß eine maßgebliche Verminderung der Standzeiten dieser Bauteile verursacht wird.

Weiters besteht bei derartigen Anlagen das Erfordernis, daß am Ende der Beschleunigungsstrecke das Förderseil mit Sicherheit von den an der Unterseite der Fahrzeuge angeordneten Kupplungsklemmen ergriffen wird, um die Ankupplung der Fahrzeuge an das Förderseil gewährleisten zu können. Zudem soll verhindert werden, daß am Beginn der Verzögerungsstrecke während der Öffnung der Kupplungsklemmen sich das Förderseil aufgrund von dessen Gewicht aus den Kupplungsklemmen herausbewegt, da hierdurch ein erhöhter Verschleiß der Kupplungsklemmen bedingt wird.

Der gegenständlichen Erfindung liegt demnach die Aufgabe zugrunde, die bekannte Anlage zum Transport von Personen und bzw. von Gütern dahingehend zu verbessern, daß die vorstehend angeführten Nachteile vermieden werden. Dies wird erfindungsgemäß dadurch erzielt, daß die Verzögerungs- bzw. Beschleunigungsräder am freien Ende jeweils eines um eine angenähert horizontale, parallel zur Fahrbahn ausgerichteten Achse verschwenkbaren Tragarmes gelagert sind, wobei die Tragarme jeweils unter Wirkung einer Stellfeder stehen, durch welche die Verzögerungs- bzw. Beschleunigungsräder an die Kontaktfläche anpreßbar sind. Durch die verschwenkbaren Tragarme kann sich die Höhenlage der Verzögerungsräder bzw. der Beschleunigungsräder an die Höhenlage der Kontaktfläche anpassen, wodurch die Belastung und damit der Verschleiß der Verzögerungsräder bzw. der Beschleunigungsräder maßgeblich vermindert wird.

Vorzugsweise sind die Tragarme für die Verzögerungs- bzw. Antriebsräder jeweils in einer U-förmig ausgebildeten Konsole gelagert, zwischen deren Schenkeln die Stellfeder angeordnet ist und deren oberer, die beiden Schenkeln verbindender Steg gegenüber der Verschwenkung der Tragarme einen Anschlag bildet. Dabei kann an den Tragarmen auch ein Antriebsrad gelagert sein, welches mit dem Verzögerungs- bzw. Beschleunigungsrad auf Mitnahme gekuppelt ist.

Gemäß einer weiteren bevorzugten. Ausführungsform sind die Tragrollen für das Förderseil in den Bereichen der Abkupplung der Fahrzeuge vom Förderseil bzw. der Ankupplung der Fahrzeuge an das Förderseil gleichfalls jeweils auf einem Tragarm, welcher um eine zumindest angenähert horizontal und quer zur Fahrbahn ausgerichteten Achse verschwenkbar ist, gelagert, wobei auch diese Tragarme jeweils unter Wirkung einer Stellfeder stehen, durch welche sie hochschwenkbar sind. Dabei können am Traggerüst Anschläge angeordnet sein, an welche die Tragarme durch die diesen zugeordneten Stellfedern zur Anlage bringbar sind.

Der Gegenstand der Erfindung ist nachstehend anhand eines in der Zeichnung dargestellten Ausführungsbeispieles näher erläutert. Es zeigen:
- Fig. 1: eine erfindungsgemäße Anlage im Bereich der Verzögerungsräder bzw. der Beschleunigungsräder, im vertikalen Querschnitt,
- Fig. 2: ein Detail der Fig. 1, in gegenüber Fig. 1 vergrößertem Maßstab und teilweise aufgebrochen,
- Fig. 3: diese Anlage in einem der Kupplungsbereiche, in Seitenansicht, und
- Fig. 4: ein Detail der Fig. 3, in gegenüber Fig. 3 vergrößertem Maßstab.

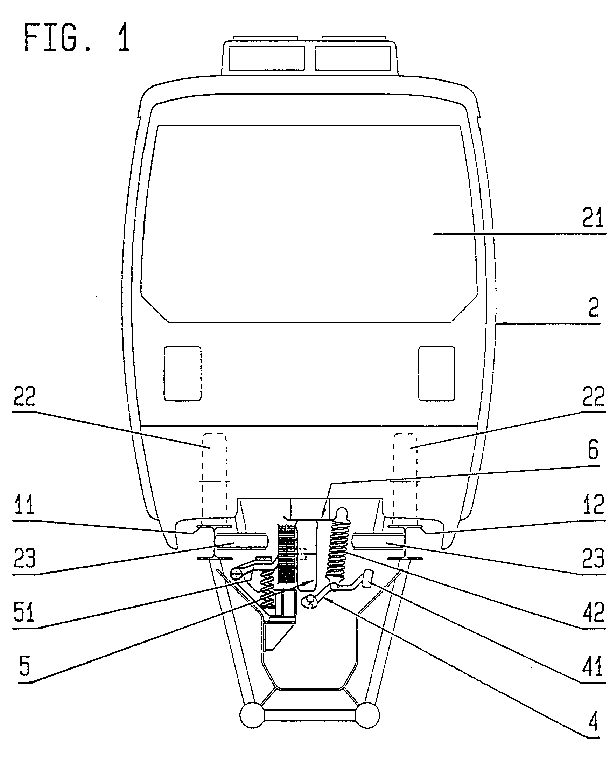

Wie dies aus Fig. 1 ersichtlich ist, besteht eine erfindungsgemäße Anlage aus einer Bahn, welche zwei Schienen 11 und 12 aufweist, längs welcher ein Fahrzeug 2 verfahrbar ist. Für den Antrieb des Fahrzeuges 2 ist ein zwischen den beiden Schienen 11 und 12 geführtes Förderseil vorgesehen, welches ständig mit einer vorgegebenen Geschwindigkeit bewegt wird und an welches das Fahrzeug 2 mittels einer Klemmeinrichtung 4 ankuppelbar ist.

In den Bereichen vor und nach den Ein- bzw. Ausstiegsstellen sind zwischen den Schienen 11 und 12 um horizontale Achsen verdrehbare Verzögerungs- bzw. Beschleunigungsräder 5 vorgesehen, welche an eine an der Unterseite des Fahrzeuges 2 angeordnete Kontaktfläche 6 zur Anlage kommen, wodurch das Fahrzeug 2 nach dessen Entkupplung vom Förderseil verzögert bzw. beschleunigt werden kann.

Das Fahrzeug 2 besteht aus einer Kabine 21 für den Transport von Personen oder von Gütern. Es ist weiters mit Laufrädern 22 ausgebildet, mittels welcher es längs der Schienen 11 und 12 verfahrbar ist. Es ist zudem mit Führungsrollen 23 versehen, welche an die Innenflächen der vertikalen Stege der I-förmig ausgebildeten Schienen 11 und 12 zur Anlage kommen. Weiters ist an seiner Unterseite die Klemmeinrichtung 4 angeordnet, mittels welcher das Fahrzeug 2 an das Förderseil ankuppelbar ist. Die Steuerung der Klemmeinrichtung 4 dahingehend, daß eine Entkupplung des Fahrzeuges 2 vom Förderseil 3 erfolgt, wird durch eine Steuerrolle 41, welche auf Steuerschienen aufläuft, bewirkt, wodurch die Kupplungsklemmen entgegen der Wirkung einer Stellfeder 42 geöffnet werden.

Weiters ist an der Bodenfläche des Fahrzeuges 2 die Kontaktfläche 6 angeordnet, an welche in den Bereichen der Ein- und Ausstiegsstellen die Verzögerungs- bzw. die Beschleunigungsräder 5, welche um zumindest angenähert horizontale Achsen verdrehbar sind, zur Anlage kommen. Die Kontaktfläche 6 ist an der Unterseite des Fahrzeuges 2 starr befestigt.

Für den Antrieb der Verzögerungs- bzw. der Beschleunigungsräder 5 sind Motoren vorgesehen, durch welche der Antrieb einer Gruppe von Rädern 5 bewirkt wird, wobei diese Räder 5 zur Erzielung der für die Verzögerung bzw. Beschleunigung des Fahrzeuges 2 erforderlichen unterschiedlichen Umfangsgeschwindigkeiten miteinander über Getriebe, z.B. Keilriemengetriebe, gekuppelt sind. Alternativ dazu können die Räder durch diesen jeweils einzeln zugeordneten Motoren angetrieben werden, wobei deren Steuerung durch ein zentrales Steuergerät erfolgt. Zudem sind Geschwindigkeitsmeßgeräte vorgesehen, deren Ausgänge an die Steuerungen der Antriebsmotoren gelegt sind.

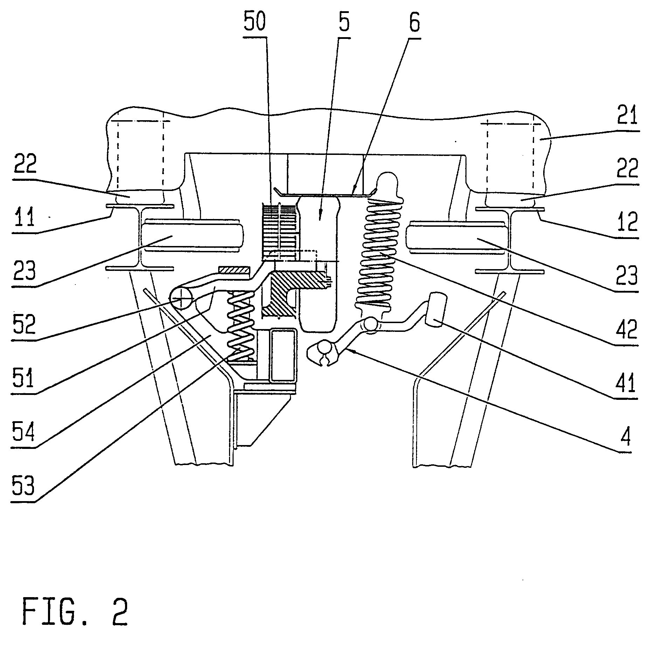

Wie dies insbesondere aus Fig. 2 ersichtlich ist, sind die Verzögerungs- bzw. Beschleunigungsräder 5 und die mit ihnen auf Mitnahme gekuppelten Antriebsräder 50 jeweils am Ende des Tragarmes 51 gelagert, welcher um eine parallel zur Fahrbahn ausgerichtete Achse 52 verschwenkbar ist und welcher unter Wirkung einer Stellfeder 53 steht. Die Stellfeder 53 befindet sich zwischen den beiden Schenkeln eines U-förmigen Trägers 54, wobei der obere, die beiden Schenkeln verbindende Steg als oberer Anschlag dient, gegen welchen der Tragarm 51 unter Wirkung der Feder 53 zur Anlage kommen kann. Hierdurch werden die Räder 5 in eine Hochlage verschwenkt, wodurch sie unabhängig von der durch die Anzahl der Passagiere bedingten Höhenlage der Kontaktfläche 6 an diese immer mit dem für deren Wirkung erforderlichen Druck zur Anlage kommen. Hierdurch wird in einfacher Weise den Erfordernissen des Betriebes entsprochen, ohne daß ein übermäßiger Verschleiß bedingt wird.

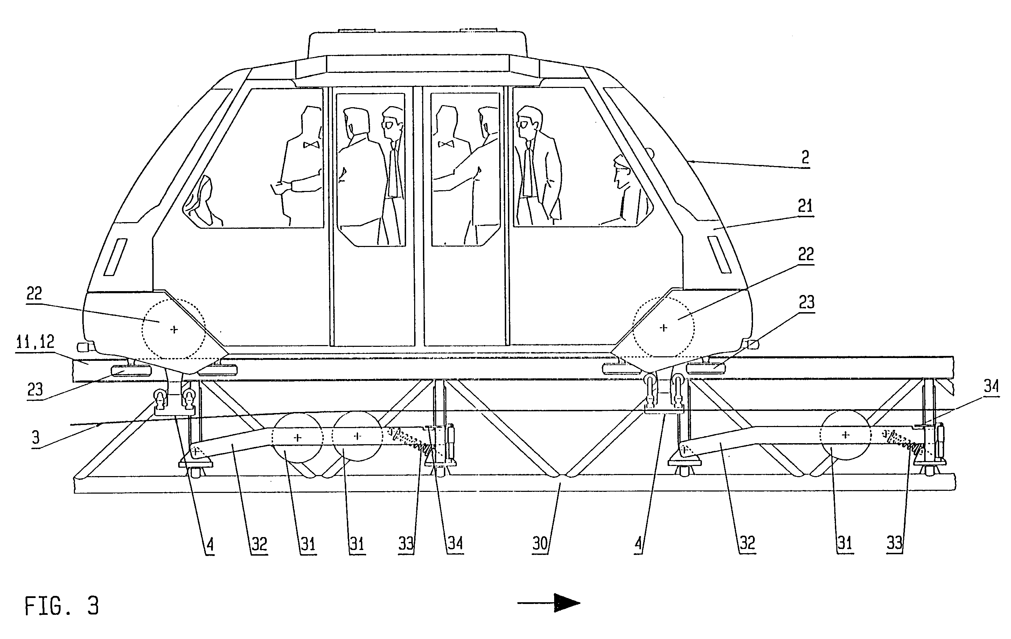

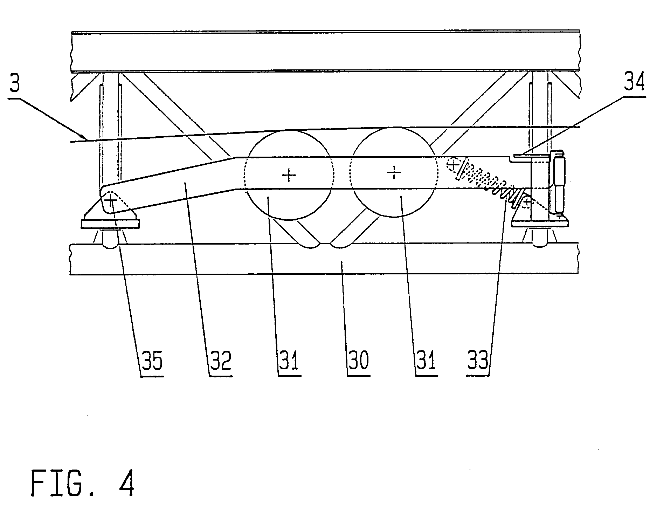

Wie dies weiters aus den Fig. 3 und 4 ersichtlich ist, sind die Tragrollen 31 für das Förderseil 3 in den Kupplungsbereichen, also in den Bereichen am Beginn der Verzögerungsstrecke und am Ende der Beschleunigungsstrecke gleichfalls an Tragarmen 32 gelagert, wobei diese Tragarme 32 um zumindest angenähert horizontale und quer zur Fahrtrichtung ausgerichtete Achsen 35 gegenüber einem Traggerüst 30 unter der Wirkung von Druckfedern 33 bis zu Anschlägen 34 hochverschwenkbar sind. Hierdurch wird das Förderseil 3 in diesen Bereichen in eine solche Lage gebracht, daß es auch bei einer Hochlage der Fahrzeuge 2 von den Klemmeinrichtungen 4 ergriffen wird bzw. daß es während des Entkuppelns am Beginn der Verzögerungsstrecke in einer solchen Hochlage gehalten wird, daß es sich nicht aus den sich öffnenden Klemmeinrichtungen löst und infolge von dessen Gewicht nach unten abgleitet. Hierdurch wird ein übermäßiger Verschleiß der Klemmeinrichtungen vermieden.

Der Betrieb einer derartigen Anlage ist wie folgt:
Außerhalb derjenigen Bereiche, in welche die Fahrzeuge 2 von Passagieren bestiegen oder verlassen werden sind die Fahrzeuge 2 mittels der Klemmeinrichtung 4 an das Förderseil 3 angekuppelt, wodurch sie längs der Bahn mit der Geschwindigkeit des Förderseiles 3 von z.B. 8 m/sek. verfahren werden. Sobald die Fahrzeuge 2 in den Bereich einer Einstiegs- bzw. Ausstiegsstelle kommen, läuft die Steuerrolle 41 der Klemmeinrichtung 4 auf die dort befindliche Steuerschiene auf, wodurch die Klemmeinrichtung 4 entgegen der Stellfeder 42 geöffnet wird, wodurch das betreffende Fahrzeug 2 vom Förderseil 3 abgekuppelt wird. Hierauf kommen die Verzögerungsräder an der Kontaktfläche 6 zur Wirkung, wodurch die Geschwindigkeit des Fahrzeuges 2 so stark herabgesetzt und allenfalls zum Stillstand gebracht wird, daß die Fahrzeugkabine 21 von Personen bestiegen oder verlassen werden kann. In weiterer Folge wird das Fahrzeug 2 mittels der Beschleunigungsräder wieder auf die Umlaufgeschwindigkeit des Förderseiles 3 gebracht, worauf es mittels der Klemmeinrichtung 4 an das Förderseil 3 angekuppelt wird. Durch das Förderseil 3 wird es dann in den Bereich der nächsten Ein- bzw. Ausstiegsstelle verfahren.

In den Bereichen der Abkupplung der Fahrzeuge 2 vom Förderseil 3 besteht bei einer Hochlage der Fahrzeuge 2 die Gefahr, daß während des Öffnens der Kupplungsklemmen das Förderseil 3 aus den Kupplungsklemmen nach unten herausgezogen wird, wodurch die Kupplungsklemmen einem starken Verschleiß unterliegen. In den Bereichen der Ankupplung der Fahrzeuge 2 an das Förderseil 3 besteht die Gefahr, daß bei einer Hochlage der Fahrzeuge 2 das Förderseil 3 von den Kupplungsklemmen nicht erfaßt wird.

Um diese Schwierigkeiten zu vermeiden, sind, wie dies aus den Fig. 3 und 4 ersichtlich ist, in den Bereichen der Abkupplung der Fahrzeuge 2 vom Förderseil 3 bzw. der Ankupplung an das Förderseil 3 die Tragrollen 31 für das Förderseil 3 auf den Tragarmen 32 gelagert, welche unter Wirkung der Druckfedern 33 in einer solchen Schwenklage gehalten werden, daß das Förderseil 3 in einer solchen Hochlage gehalten wird, daß es beim Entkuppeln nicht aus den Kupplungsklemmen herausgleitet bzw. daß es beim Ankuppeln von den Kupplungseinrichtungen mit Sicherheit erfaßt wird. Hierdurch wird die erforderliche Betriebssicherheit erzielt bzw. werden die Kupplungsklemmen vor übermäßigem Verschleiß bewahrt.

## Patentansprüche

1. Anlage zum Transport von Personen und bzw. oder von Gütern mit einer Mehrzahl von mit Laufrädern ausgebildeten Fahrzeugen (2), welche an ein sich ständig bewegendes Förderseil (3) ankuppelbar sind, wodurch sie längs einer Fahrbahn, insbesondere längs Schienen (11, 12), verfahrbar sind, wobei in Bereichen von Einstiegs- bzw. Ausstiegsstellen, in welchen die Fahrzeuge vom Förderseil abkuppelbar sind, Verzögerungs- bzw. Beschleunigungsräder (5) vorgesehen sind, welche an die Fahrzeuge zur Anlage bringbar sind, wodurch deren Fahrgeschwindigkeit verkleinert oder vergrößert wird und wobei die Fahrzeuge an ihrer Unterseite mit mindestens einer Kontaktfläche (6) ausgebildet sind, mit welcher die Verzögerungs- bzw. die Beschleunigungsräder, welche im Bereich der Fahrbahn um zumindest angenähert horizontale Achsen gelagert sind, zusammenwirken, dadurch gekennzeichnet, daß die Verzögerungs- bzw. Beschleunigungsräder (5) jeweils am freien Ende eines um eine angenähert horizontale, parallel zur Fahrbahn ausgerichteten Achse (52) verschwenkbaren Tragarmes (51) gelagert sind, wobei die Tragarme (51) unter Wirkung jeweils einer Stellfeder (53) stehen, durch welche die Verzögerungs- bzw. Beschleunigungsräder (5) an die Kontaktfläche (6) anpreßbar sind.

2. Anlage nach Patentanspruch 1, dadurch gekennzeichnet, daß die Tragarme (51) jeweils in einer U-förmig ausgebildeten Konsole (54) gelagert sind, zwischen deren Schenkeln die Stellfeder (53) angeordnet ist und deren oberer, die beiden Schenkeln verbindender Steg gegenüber der Verschwenkung der Tragarme (51) einen Anschlag bildet.

3. Anlage nach einem der Patentansprüche 1 bis 3, dadurch gekennzeichnet, daß an den Tragarmen (51) auch ein Antriebsrad (50) gelagert ist, welches mit dem Verzögerungs- bzw. Beschleunigungsrad (5) auf Mitnahme gekuppelt ist.

4. Anlage nach einem der Patentansprüche 1 bis 3, dadurch gekennzeichnet, daß die Tragrollen (31) für das Förderseil (3) in den Bereichen der Abkupplung der Fahrzeuge (2) vom Förderseil (3) bzw. der Ankupplung der Fahrzeuge (2) an das Förderseil (3) gleichfalls jeweils auf einem Tragarm (32), welcher um eine zumindest angenähert horizontal und quer zur Fahrbahn ausgerichteten Achse (35) verschwenkbar ist, gelagert sind, wobei auch diese Tragarme (32) jeweils unter Wirkung einer Stellfeder (34) stehen, durch welche sie hochschwenkbar sind.

5. Anlage nach Patentanspruch 4, dadurch gekennzeichnet, daß am Traggerüst (30) für die Tragarme (32) Anschläge (34) angeordnet sind, an welche die Tragarme (32) durch die diesen zugeordneten Stellfedern (33) zur Anlage bringbar sind.

## Claims

1. An installation for transporting people and/or goods, having a plurality of operating units (2), comprising running wheels, which may be coupled to a constantly moving hauling cable (3), whereby they may travel along a track, in particular along rails (11, 12), wherein decelerating and accelerating wheels (5) are provided respectively in the areas of boarding and alighting points, in which the operating units may be uncoupled from the hauling cable, which decelerating and accelerating wheels (5) may be brought to bear against the operating units, whereby the travelling speed thereof is reduced or increased, and wherein the operating units are constructed on their undersides with at least one contact surface (6), with which there interact the decelerating or accelerating wheels respectively, which are mounted in the area of the track about at least approximately horizontal axes, characterised in that the decelerating and accelerating wheels (5) are each mounted at the free end of a supporting arm (51) swivellable about an approximately horizontal axis (52) oriented in parallel with the track, wherein the supporting arms (51) are each acted upon by an adjusting spring (53), by means of which the decelerating and accelerating wheels (5) respectively may be pressed against the contact surface (6).

2. An installation according to claim 1, characterised in that the supporting arms (51) are each mounted in a U-shaped bracket (54), between the legs of which there is arranged the adjusting spring (53) and the upper web of which, which connects the two legs, forms a limit stop with respect to swivelling of the supporting arms (51).

3. An installation according to any one of claims 1 to 3, characterised in that a drive wheel (50) is also mounted on the supporting arms (51), which drive wheel (50) is coupled for driving to the decelerating or accelerating wheel (5).

4. An installation according to any one of claims 1 to 3, characterised in that, in the areas in which the operating units (2) are uncoupled from the hauling cable (3) or coupled to the hauling cable (3), the carrying rollers (31) for the hauling cable (3) are likewise each mounted on a supporting arm (32), which may be swivelled about an at least approximately horizontal axis (35) oriented at right angles to the track, wherein these supporting arms (32) are also each acted upon by an adjusting spring (34), by means of which they may be swivelled upwards.

5. An installation according to claim 4, characterised in that limit stops (34) are arranged on the supporting frame (30) for the supporting arms (32), against which limit stops (34) the supporting arms (32) may be brought to bear by the adjusting springs (33) associated therewith.

## Revendications

1. Installation de transport de personnes et/ou de marchandises, comportant une pluralité de véhicules (2) présentant des roues de roulement, qui peuvent être accouplés à un câble de transport (3) se déplaçant en permanence, ce qui fait qu'ils sont déplaçables le long d'une voie de roulement, en particulier le long de rails (11, 12) dans la région d'emplacements de montée ou de descente, dans lesquels les véhicules peuvent être désaccouplés du câble de transport, des roues de ralentissement ou d'accélération (5) étant prévues qui peuvent être amenées en application contre les véhicules, ce qui fait que leur vitesse de déplacement est réduite ou augmentée et les véhicules présentant sur leur face intérieure au moins une surface de contact (6), avec laquelle coopèrent les roues de ralentissement ou d'accélération, qui sont montées dans la région de la voie de roulement, autour d'axes au moins approximativement horizontaux, caractérisée en ce que les roues de ralentissement ou d'accélération (5) sont montées chacune à l'extrémité libre d'un bras de support (51) pouvant pivoter autour d'axes (52) approximativement horizontaux orientés parallèlement à la voie de roulement, les bras de support (51) étant soumis chacun a l'action d'un ressort d'ajustage (53), par lequel les roues de ralentissement ou d'accélération (5) peuvent être pressées contre la surface de contact.

2. Installation selon la revendication 1, caractérisée en ce que les bras de support (51) sont montés chacun dans une console (54) en U entre les branche de laquelle est disposé le ressort d'ajustage (53) et dont la traverse supérieure, reliant les deux branches, forme une butée pour le pivotement des bras de support (51).

3. Installation selon l'une des revendications 1 à 2, caractérisée en ce que sur les bras de support (51) est montée aussi une roue d'entraînement (50), qui est accouplée en entraînement à la roue de ralentissement ou d'accélération (5).

4. Installation selon l'une des revendications 1 à 3, caractérisée en ce que les poulies de support (31) pour le câble de transport (3) sont montées, dans les zones du désaccouplement des véhicules (2) du câble de transport (3) ou de l'accouplement des véhicules (2) au câble de transport (3), également chacune sur un bras de support (32) qui peut pivoter autour d'un axe (35) au moins approximativement horizontal et orienté transversalement à la voie de roulement, ces bras de support (32) se trouvant aussi chacun sous l'effet d'un ressort d'ajustage (34), par lequel ils peuvent être pivotés vers le haut.

5. Installation selon la revendication 4, caractérisée en ce que sur le bâti de support (3) pour les bras de support (32) sont disposées des butées (34) contre lesquelles les bras de support (32) peuvent être amenés en application par les ressorts d'ajustage (33) associés à ceux-ci.
